# EUROPEAN PATENT SPECIFICATION

(11) **EP 3 481 238 B1**
(45) Date of publication and mention of the grant of the patent: **15.04.2020**
(21) Application number: 17736958.4
(22) Date of filing: 07.07.2017
(51) Int. Cl.: A24F 47/00, A24B 15/16, A24D 3/08, A24D 3/14, A24F 7/00

(54) **E-VAPING DEVICES WITH FLAVORED MOUTH-END INSERT**
E-VAPING VORRICHTUNGEN MIT AROMATISIERTE MUNDSTÜCKEINSATZ
DISPOSITIF DE VAPOTAGE AVEC INSERT À EXTREMITÉ BUCCAL AROMATISÉ

(30) Priority: 08.07.2016 US 201615205532
(43) Date of publication of application: 15.05.2019
(73) Proprietor: Philip Morris Products S.A., 2000 Neuchâtel (CH)
(72) Inventor: MISHRA, Munmaya K., Richmond, Virginia 23219 (US); FERNANDEZ, Douglas A., Richmond, Virginia 23219 (US); GRAY, Rebecca, Richmond, Virginia 23219 (US); SIMPSON, Chris, Richmond, Virginia 23219 (US); KOBAL, Gerd, Richmond, Virginia 23219 (US); MARCQ, Pauline, Richmond, Virginia 23219 (US); HAWES, Eric A., Richmond, Virginia 23219 (US); BAILEY, Ryan A., Richmond, Virginia 23219 (US); FANG, Yu, Richmond, Virginia 23219 (US)
(74) Representative: Nytko-Lutz, Emily Anne
(86) International application number: PCT/EP2017/067162
(87) International publication number: WO 2018/007626

(56) References cited:
- CN-A- 105 707 980
- GB-A- 1 442 631
- US-A- 4 971 078
- US-A- 4 995 407
- US-A1- 2010 055 233
- US-A1- 2011 230 587

## Description

The present disclosure relates generally to a flavored mouth-end insert or add-on tip for an e-vaping device, a manufacturing method thereof, and e-vaping devices comprising such mouth-end inserts.

US 2010/055233 A1 relates to optimization of flavored polymeric compositions and methods of producing optimized flavored polymeric compositions. US 2011/230587 A1 relates to articles comprising flavored polymeric compositions. More specifically, both US 2010/055233 A1 and US 2011/230587 A1 relate to flavored polymeric compositions comprising "flavor enhancing agents" alone or in combination with other flavorants as well as polymeric articles made from the same, wherein articles made from such polymeric compositions are not intended to be consumed, significantly destructed, masticated or fully or partially dissolved to release flavor.

Electronic vaping devices, or e-vaping devices, are used to vaporize a formulation in order for an adult vaper to draw the vapor through one or more outlets of the e-vaping device. An e-vaping device may typically include several e-vaping elements such as a power supply section and a cartridge. The power supply section includes a power source such as a battery, and the cartridge includes a heater along with a reservoir capable of holding the pre-vapor formulation in liquid form. The cartridge typically includes the heater which is in contact with a pre-vapor formulation via a wick, the pre-vapor formulation being stored in a storage container, the heater being configured to heat the pre-vapor formulation via the wick to produce a vapor. The pre-vapor formulation typically includes an amount of nicotine. The e-vaping device may also include a mouth-end insert designed to facilitate drawing of the vapor through one or more outlets of the e-vaping device by the adult e-vaper. For example, the pre-vapor formulation is a material or combination of materials that may be transformed into a vapor. For example, the pre-vapor formulation may include at least one of a liquid, solid or gel formulation including, but not limited to, water, beads, solvents, active ingredients, ethanol, plant extracts, natural or artificial flavors, vapor formers such as glycerine or propylene glycol, and combinations thereof.

In other e-vaping devices, adding flavorants or aromas is typically performed by adding the flavorants or aromas to the storage container. However, if one or more flavorants or aromas adversely react with other ingredients of the pre-vapor formulation, degradation of the pre-vapor formulation, or degradation of the flavorants, taste compounds and aromas, may occur as a result.

With respect to smokeable devices such as, for example, cigars, it is typically challenging to add flavorants without adding the flavorants directly to the tobacco included in the cigar.

At least one example embodiment relates to an e-vaping device comprising a mouth-end insert including a flavored portion, the flavored portion comprising: a solid matrix; and at least one or more flavorants, one or more taste compounds and one or more aromas, the at least one or more flavorants, one or more tast compounds and one or more aromas being embedded within the solid matrix. In example embodiments, at least one of flavorants, taste compounds and aromas may be included in the fabricating process of a mouth-end insert, the fabricating process of an add-on tip, or both. For example, at least one of flavorants, taste compounds and aromas may be inserted in the material used to form the mouth-end insert, the material used to form the add-on tip, or both. The mouth-end insert, the add-on tip, or both, may be manufactured by injection molding of a thermoplastic such as, for example, polypropylene (PP) or high density or low density polyethylene (PE). Accordingly, by adding an amount of at least one of flavorant, taste compounds and aromas to the thermoplastic and mixing the at least one flavorants, taste compounds and aromas to the thermoplastic before the injection molding process, the at least one flavorant, taste compounds and aromas may be incorporated in the resulting mouth-end insert, the add-on tip, or both. Therefore, during operation of the e-vaping device by an adult e-vaper, the vapor consumed by the adult e-vaper, which passes first through the mouth-end insert or the add-on tip, may include an amount of at least one of flavorant and aroma, the at least one flavorant and aroma being those incorporated during the fabricating process of the mouth-end insert or of the add-on tip. As a result, the adult e-vaper may experience an improved sensory experience.

In example embodiments, a temperature of the injection molding process may be, for example, about 150 degrees Celsius and may typically not exceed, for example, about 350 degrees Celsius. When the temperature of the injection molding process exceeds 350 degrees Celsius, the thermoplastic polymer may undergo degradation, resulting in degraded properties of the thermoplastic polymer.

In example embodiments, the flavorant, aroma, or both, may be included at a concentration of up to about 2 percent by weight of the mixture of thermoplastic polymer used to manufacture the mouth-end insert or add-on tip, and may be configured to be resistant to the temperature of the injection molding process. For example, the flavorant, aroma, or both, may be encapsulated, or provided in granulated form in the mixture of thermoplastic polymer, in order to have a higher heat resistance.

Example flavorants may include flavors such as, for example, menthol, and the like. Example taste compounds may include, for example, sweet, sour, and the like. Various aromas providing various smells may also be added to the mixture of thermoplastic polymer.

In example embodiments, the flavorant, taste compounds, aromas, and combinations thereof, are substantially homogeneously mixed with the thermoplastic polymer mixture prior to undergoing the injection molding process. Accordingly, as the conclusion of the injection molding process, the flavorant, taste compounds, aroma, and combinations thereof, may be substantially homogeneously distributed within the resulting solid matrix of the thermoplastic polymer. With respect to aromas, the aromas may remain substantially homogeneously distributed in the solid thermoplastic polymer, even after multiple operations of the e-vaping device. With respect to the flavorants, although the flavorants are homogeneously distributed in the thermoplastic polymer at the conclusion of the injection molding process, during operation of the e-vaping device, the flavorants may tend to migrate towards the outer surface of the solid thermoplastic polymer.

During operation of the e-vaping device, the heated vapor generated in the chimney of the cartridge transits through the mouth-end insert or add-on tip before reaching the mouth of the adult e-vapor. Accordingly, because the mouth-end insert includes flavorant, aromas, or both, incorporated therein, the heated vapor transiting through the mouth-end insert before reaching the mouth of the adult e-vapor collects the flavors, aromas, or both, consistent with the flavorant, aromas, or both, incorporated in the thermoplastic polymer mouth-end insert or add-on tip during manufacture of the mouth-end insert or the add-on tip.

In example embodiments, if two different flavorants or aromas could not be mixed together in the pre-vapor formulation because of the potential occurrence of an adverse reaction between the different flavorants or aromas, the incorporation of the flavorants or aromas in the mouth-end insert or in the add-on tip, homogeneously distributed within the thermoplastic polymer matrix of the mouth-end insert or the add-on tip, provides the ability for the adult e-vapor, in the case of an e-vaping device, or to the adult smoker, in the case of a smokeable device outside the scope of the present invention, to taste two or more favors or aromas that could otherwise not be stably mixed together.

In example embodiments, the thermoplastic polymer used to form the mouth-end insert may include polypropylene (PP), high density or low density polyethylene (PE), or the like.

In example embodiments, the manufacturing method of a mouth-end insert including at least one of flavorants, taste compounds and aromas may minimize flavor loss, provide better control of delivery of flavor, taste, or both, to the adult e-vaper, in the case of an e-vaping device, or to the adult smoker, in the case of a smokeable device, and improve the sensory experience of the adult e-vaper.

The above and other features and advantages of example embodiments will become more apparent by describing in detail, example embodiments with reference to the attached drawings. The accompanying drawings are intended to depict example embodiments and should not be interpreted to limit the intended scope of the claims. The accompanying drawings are not to be considered as drawn to scale unless explicitly noted.
FIG. 1 is a side view of an e-vaping device, according to an example embodiment;
FIG. 2 is a longitudinal cross-sectional view of an e-vaping device, according to an example embodiment;
FIG. 3 is a longitudinal cross-sectional view of another example embodiment of an e-vaping device;
FIG. 4 is a longitudinal cross-sectional view of another example embodiment of an e-vaping device;
Fig. 5 is a flow chart illustrating a method of manufacturing a flavored mouth-end insert or add-on tip, according to at least one example embodiment;
Figs. 6(a)-(c) are a perspective views of a mouth-end insert and an add-on tip, according to at least one example embodiment;
Fig. 7 is a cross-section of a mouth-end insert including flavorants, according to at least one example embodiment; and
Fig. 8 is a cross-section of a mouth-end insert including aromas, according to at least one example embodiment.

Some detailed example embodiments are disclosed herein. However, specific structural and functional details disclosed herein are merely representative for purposes of describing example embodiments. Example embodiments may, however, be embodied in many alternate forms and should not be construed as limited to only the embodiments set forth herein.

Accordingly, while example embodiments are capable of various modifications and alternative forms, embodiments thereof are shown by way of example in the drawings and will herein be described in detail. It should be understood, however, that there is no intent to limit example embodiments to the particular forms disclosed, but to the contrary, example embodiments are to cover all modifications, equivalents, and alternatives falling within the scope of example embodiments. Like numbers refer to like elements throughout the description of the figures.

It should be understood that when an element or layer is referred to as being "on," "connected to," "coupled to," or "covering" another element or layer, it may be directly on, connected to, coupled to, or covering the other element or layer or intervening elements or layers may be present. In contrast, when an element is referred to as being "directly on," "directly connected to," or "directly coupled to" another element or layer, there are no intervening elements or layers present. Like numbers refer to like elements throughout the specification.

It should be understood that, although the terms "first," "second," "third," and so forth may be used herein to describe various elements, regions, layers or sections, these elements, regions, layers, or sections should not be limited by these terms. These terms are only used to distinguish one element, region, layer, or section from another element, region, layer, or section. Therefore, a first element, region, layer, or section discussed below could be termed a second element, region, layer, or section without departing from the teachings of example embodiments.

Spatially relative terms (for example, "beneath," "below," "lower," "above," "upper," and the like) may be used herein for ease of description to describe one element or feature's relationship to another element or feature as illustrated in the figures. It should be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Therefore, the term "below" may encompass both an orientation of above and below. The device may be otherwise oriented (rotated 90 degrees or at other orientations) and the spatially relative descriptors used herein interpreted accordingly.

The terminology used herein is for the purpose of describing various embodiments only and is not intended to be limiting of example embodiments. As used herein, the singular forms "a," "an," and "the" are intended to include the plural forms as well, unless the context clearly indicates otherwise. It will be further understood that the terms "includes," "including," "comprises," and "comprising," when used in this specification, specify the presence of stated features, integers, steps, operations or elements, but do not preclude the presence or addition of one or more other features, integers, steps, operations, elements or groups thereof.

Example embodiments are described herein with reference to cross-sectional illustrations that are schematic illustrations of idealized embodiments (and intermediate structures) of example embodiments. As such, variations from the shapes of the illustrations as a result, for example, of manufacturing techniques or tolerances, are to be expected. Therefore, example embodiments should not be construed as limited to the shapes of regions illustrated herein but are to include deviations in shapes that result, for example, from manufacturing. Therefore, the regions illustrated in the figures are schematic in nature and their shapes are not intended to illustrate the actual shape of a region of a device and are not intended to limit the scope of example embodiments.

Unless otherwise defined, all terms (including technical and scientific terms) used herein have the same meaning as commonly understood by one of ordinary skill in the art to which example embodiments belong. It will be further understood that terms, including those defined in commonly used dictionaries, should be interpreted as having a meaning that is consistent with their meaning in the context of the relevant art and will not be interpreted in an idealized or overly formal sense unless expressly so defined herein.

When the terms "about" or "substantially" are used in this specification in connection with a numerical value, it is intended that the associated numerical value include a tolerance of ±10 percent around the stated numerical value. Moreover, when reference is made to percentages in this specification, it is intended that those percentages are based on weight, that is, weight percentages. The expression "up to" includes amounts of zero to the expressed upper limit and all values therebetween. When ranges are specified, the range includes all values therebetween such as increments of 0.1 percent.

As used herein, the term "vapor former" describes any suitable known compound or mixture of compounds that, in use, facilitates formation of a vapor and that is substantially resistant to thermal degradation at the operating temperature of the e-vaping device. Suitable vapor-formers consist of various compositions of polyhydric alcohols such as at least one of propylene glycol and glycerol or glycerin. In at least one embodiment, the vapor former is propylene glycol.

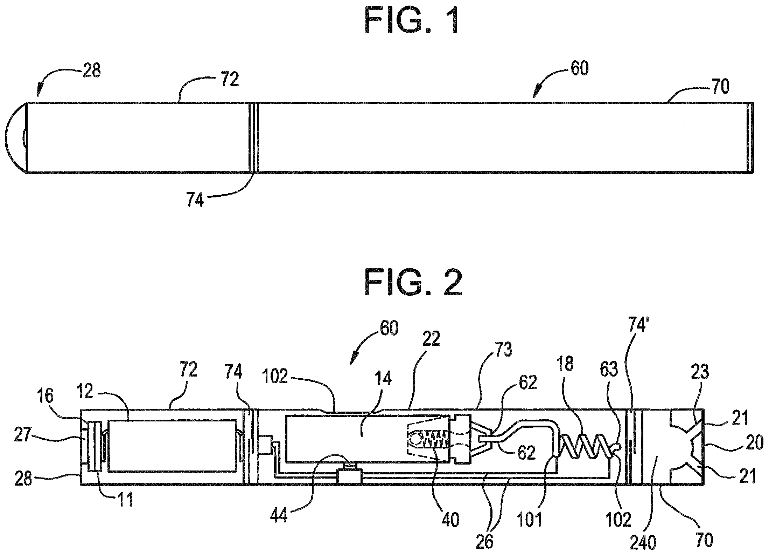

Fig. 1 is a side view of an e-vaping device or a "cigalike" device 60, according to an example embodiment. In Fig. 1, the e-vaping device 60 includes a first section or cartridge 70 and a second section 72, which are coupled together at a threaded joint 74 or by other connecting structure such as at least one of a snug-fit, snap-fit, detent, clamp, clasp or the like. In at least one example embodiment, the first section or cartridge 70 may be a replaceable cartridge, and the second section 72 may be a reusable section. Alternatively, the first section or cartridge 70 and the second section 72 may be integrally formed in one piece. In at least one embodiment, the second section 72 includes a LED at a distal end 28 thereof.

Fig. 2 is a cross-sectional view of an example embodiment of an e-vaping device. As shown in Fig. 2, the first section or cartridge 70 can house a mouth-end insert 20, a capillary tube 18, and a reservoir 14.

In example embodiments, the reservoir 14 may include a wrapping of gauze about an inner tube (not shown). For example, the reservoir 14 may be formed of or include an outer wrapping of gauze surrounding an inner wrapping of gauze. In at least one example embodiment, the reservoir 14 may be formed of or include an alumina ceramic in the form of loose particles, loose fibers, or woven or nonwoven fibers. Alternatively, the reservoir 14 may be formed of or include a cellulosic material such as cotton or gauze material, or a polymer material, such as polyethylene terephthalate, in the form of a bundle of loose fibers. A more detailed description of the reservoir 14 is provided below.

The second section 72 can house a power supply 12 and control circuitry 11 configured to control the power supply 12, and a puff sensor 16. The puff sensor 16 is configured to sense when an adult vaper is drawing on the e-vaping device 60, which triggers operation of the power supply 12 via the control circuitry 11 to heat the pre-vapor formulation housed in the reservoir 14, and thereby form a vapor. A threaded portion 74 of the second section 72 can be connected to a battery charger, when not connected to the first section or cartridge 70, to charge the battery or power supply section 12.

In example embodiments, the capillary tube 18 is formed of or includes a conductive material, and therefore may be configured to be its own heater by passing current through the tube 18. The capillary tube 18 may be any electrically conductive material capable of being heated, for example resistively heated, while retaining the necessary structural integrity at the operating temperatures experienced by the capillary tube 18, and which is non-reactive with the pre-vapor formulation. Suitable materials for forming the capillary tube 18 are one or more of stainless steel, copper, copper alloys, porous ceramic materials coated with film resistive material, nickel-chromium alloys, and combinations thereof. For example, the capillary tube 18 is a stainless steel capillary tube 18 and serves as a heater via electrical leads 26 attached thereto for passage of direct or alternating current along a length of the capillary tube 18. Therefore, the stainless steel capillary tube 18 is heated by, for example, resistance heating. Alternatively, the capillary tube 18 may be a non-metallic tube such as, for example, a glass tube. In such an embodiment, the capillary tube 18 also includes a conductive material such as, for example, stainless steel, nichrome or platinum wire, arranged along the glass tube and capable of being heated, for example resistively. When the conductive material arranged along the glass tube is heated, pre-vapor formulation present in the capillary tube 18 is heated to a temperature sufficient to at least partially volatilize pre-vapor formulation in the capillary tube 18.

In at least one embodiment, the electrical leads 26 are bonded to the metallic portion of the capillary tube 18. In at least one embodiment, one electrical lead 26 is coupled to a first, upstream portion 101 of the capillary tube 18 and a second electrical lead 26 is coupled to a downstream, end portion 102 of the capillary tube 18.

In operation, when an adult vaper draws on the e-vaping device, the puff sensor 16 detects a pressure gradient caused by the drawing of the adult vaper, and the control circuitry 11 controls heating of the pre-vapor formulation located in the reservoir 14 by providing power to the capillary tube 18. Once the capillary tube 18 is heated, the pre-vapor formulation contained within a heated portion of the capillary tube 18 is volatilized and emitted from the outlet 63, where the pre-vapor formulation expands and mixes with air and forms a vapor in mixing chamber 240.

As shown in Fig. 2, the reservoir 14 includes a valve 40 configured to maintain the pre-vapor formulation within the reservoir 14 and to open when the reservoir 14 is squeezed and pressure is applied thereto, the pressure being created when an adult vaper draws on the e-vaping device at the mouth-end insert 20, which results in the reservoir 14 forcing the pre-vapor formulation through the outlet 62 of the reservoir 14 to the capillary tube 18. In at least one embodiment, the valve 40 opens when a critical, minimum pressure is reached so as to avoid inadvertently dispensing pre-vapor formulation from the reservoir 14. In at least one embodiment, the pressure required to press the pressure switch 44 is high enough such that accidental heating due to the pressure switch 44 being inadvertently pressed by outside factors such as physical movement or collision with outside objects is avoided.

The power supply 12 of example embodiments can include a battery arranged in the second section 72 of the e-vaping device 60. The power supply 12 is configured to apply a voltage to volatilize the pre-vapor formulation housed in the reservoir 14.

In at least one embodiment, the electrical connection between the capillary tube 18 and the electrical leads 26 is substantially conductive and temperature resistant while the capillary tube 18 is substantially resistive so that heat generation occurs primarily along the capillary tube 18 and not at the contacts.

The power supply section or battery 12 may be rechargeable and include circuitry allowing the battery to be chargeable by an external charging device. In example embodiments, the circuitry, when charged, provides power for a given number of draws through outlets of the e-vaping device, after which the circuitry may have to be re-connected to an external charging device.

In at least one embodiment, the e-vaping device 60 may include control circuitry 11 which can be, for example, on a printed circuit board. The control circuitry 11 may also include a heater activation light 27 that is configured to glow when the device is activated. In at least one embodiment, the heater activation light 27 comprises at least one LED and is at a distal end 28 of the e-vaping device 60 so that the heater activation light 27 illuminates a cap which takes on the appearance of a burning coal during a puff. Moreover, the heater activation light 27 can be configured to be visible to the adult vaper. The light 27 may also be configured such that the adult vaper can activate, deactivate, or activate and deactivate the light 27 when desired, such that the light 27 is not activated during vaping if desired.

In at least one embodiment, the e-vaping device 60 further includes a mouth-end insert 20 having at least two off-axis, diverging outlets 21 that are uniformly distributed around the mouth-end insert 20 so as to substantially uniformly distribute vapor in an adult vaper's mouth during operation of the e-vaping device. In at least one embodiment, the mouth-end insert 20 includes at least two diverging outlets 21 (for example, 3 to 8 outlets or more). In at least one embodiment, the outlets 21 of the mouth-end insert 20 are located at ends of off-axis passages 23 and are angled outwardly in relation to the longitudinal direction of the e-vaping device 60 (for example, divergently). As used herein, the term "off-axis" denotes an angle to the longitudinal direction of the e-vaping device.

In at least one embodiment, the e-vaping device 60 is about the same size as a tobacco-based product. In some embodiments, the e-vaping device 60 may be about 80 millimetres to about 110 millimetres long, for example about 80 millimetres to about 100 millimetres long and about 7 millimetres to about 10 millimetres in diameter.

The outer cylindrical housing 22 of the e-vaping device 60 may be formed of or include any suitable material or combination of materials. In at least one embodiment, the outer cylindrical housing 22 is formed at least partially of metal and is part of the electrical circuit connecting the control circuitry 11, the power supply 12 and the puff sensor 16.

As shown in Fig. 2, the e-vaping device 60 can also include a middle section (third section) 73, which can house the pre-vapor formulation reservoir 14 and the capillary tube 18. The middle section 73 can be configured to be fitted with a threaded joint 74' at an upstream end of the first section or cartridge 70 and a threaded joint 74 at a downstream end of the second section 72. In this example embodiment, the first section or cartridge 70 houses the mouth-end insert 20, while the second section 72 houses the power supply 12 and the control circuitry 11 that is configured to control the power supply 12.

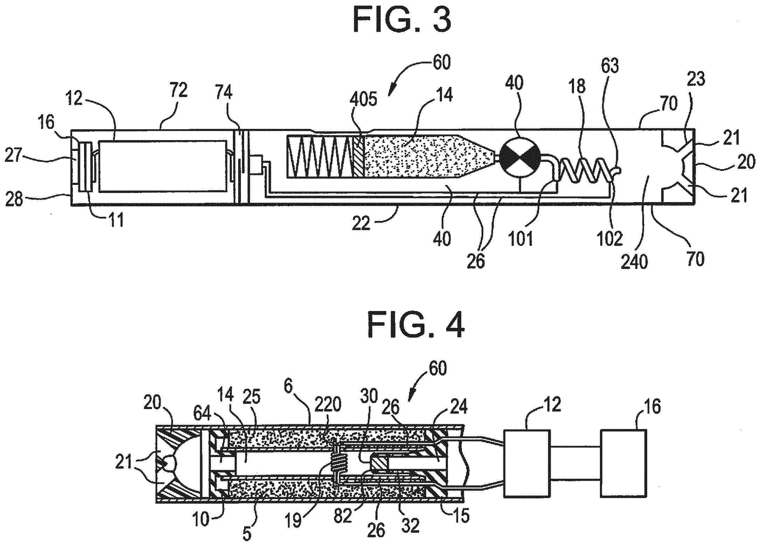

Fig. 3 is a cross-sectional view of an e-vaping device according to an example embodiment. In at least one embodiment, the first section or cartridge 70 is replaceable so as to avoid the need for cleaning the capillary tube 18. In at least one embodiment, the first section or cartridge 70 and the second section 72 may be integrally formed without threaded connections to form a disposable e-vaping device.

As shown in Fig. 3, in other example embodiments, a valve 40 can be a two-way valve, and the reservoir 14 can be pressurized. For example, the reservoir 14 can be pressurized using a pressurization arrangement 405 configured to apply constant pressure to the reservoir 14. As such, emission of vapor formed via heating of the pre-vapor formulation housed in the reservoir 14 is facilitated. Once pressure upon the reservoir 14 is relieved, the valve 40 closes and the heated capillary tube 18 discharges any pre-vapor formulation remaining downstream of the valve 40.

FIG. 4 is a longitudinal cross-sectional view of another example embodiment of an e-vaping device. In FIG. 4, the e-vaping device 60 can include a central air passage 24 in an upstream seal 15. The central air passage 24 opens to the inner tube 65. Moreover, the e-vaping device 60 includes a reservoir 14 configured to store the pre-vapor formulation. The reservoir 14 includes the pre-vapor formulation and optionally a storage medium 25 such as gauze configured to store the pre-vapor formulation therein. In an embodiment, the reservoir 14 is contained in an outer annulus between the outer tube 6 and the inner tube 65. The annulus is sealed at an upstream end by the seal 15 and by a stopper 10 at a downstream end so as to prevent leakage of the pre-vapor formulation from the reservoir 14. The heater 19 at least partially surrounds a central portion of a wick 220 such that when the heater is activated, the pre-vapor formulation present in the central portion of the wick 220 is vaporized to form a vapor. The heater 19 is connected to the battery 12 by two spaced apart electrical leads 26. The e-vaping device 60 further includes a mouth-end insert 20 having at least two outlets 21. The mouth-end insert 20 is in fluid communication with the central air passage 24 via the interior of inner tube 65 and a central passage 64, which extends through the stopper 10.

The e-vaping device 60 may include an air flow diverter comprising an impervious plug 30 at a downstream end 82 of the central air passage 24 in seal 15. In at least one example embodiment, the central air passage 24 is an axially extending central passage in seal 15, which seals the upstream end of the annulus between the outer and inner tubes 6, 65. The radial air channel 32 directing air from the central passage 20 outward toward the inner tube 65. In operation, when an adult vaper draws through outlets of the e-vaping device, the puff sensor 16 detects a pressure gradient caused by the drawing of the adult vaper through outlets of the e-vaping device, and as a result the control circuitry 11 controls heating of the pre-vapor formulation located in the reservoir 14 by providing power the heater 19.

In various examples outside the scope of the present invention, a mouth-end insert similar to or the same as the mouth-end insert 20 discussed above, may be provided at an end of a smokeable device such as, for example, a cigar. In this case, flavorants present in the mouth-end insert may be transported to the adult smoker, and the adult smoker may taste various flavors when smoking the smokeable device.

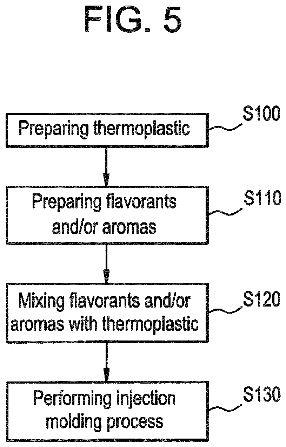

Fig. 5 is a flow chart illustrating a method of manufacturing a flavored mouth-end insert or an add-on tip, according to at least one example embodiment. In Fig. 5, the method starts at S100, where a thermoplastic polymer such as, for example, polypropylene (PP) or high density or low density polyethylene (PE), is prepared. In one example embodiment, other thermoplastic polymers, or mixtures thereof, may also be prepared. The thermoplastic polymer may be a polymer used to form the mouth-end insert or the add-on tip of an e-vaping device. Accordingly, the thermoplastic polymer must be able to sustain the temperature of the heated vapor generated during operation of an e-vaping device without substantially degrading. At S110, flavorants, taste compounds, aromas, or combinations thereof are prepared. For example, the flavorants, taste compounds, aromas or combinations thereof may be selected to provide specific flavors, tastes, or both, to the vapor drawn through one or more outlets of the e-vaping device by an adult e-vaper during operation of the e-vaping device. In example embodiments, if the flavorants, taste compounds, aromas or combinations thereof are in liquid form, the flavorants, taste compounds, aromas or combinations thereof may be converted to free-flowing powders via encapsulation using, for example, a polymer matrix. The encapsulation may ensure both the reduction or the substantial prevention of flavor and taste loss and preserve the integrity of the flavorants, taste compounds, aromas or combinations thereof when treated at high temperatures. For example, the encapsulation may be performed via spray-drying. In example embodiments, "complex black" or "oriental flavors" or other flavors may be converted to free-flowing powder using, for example, gum arabic, maltodextrin, or both, via a spray-drying process. In example embodiments, liquid flavors or aromas may be converted to free-flowing powders by mixing the flavors with free-flowing polymer powders to generate a flavor concentrate that can be added in a fabricating process. Suitable flavors or flavorings can include, but are not limited to, menthol, mint, such as peppermint and spearmint, chocolate, licorice, citrus and other fruit flavors, gamma octalactone, vanillin, ethyl vanillin, breath freshener flavors, spice flavors such as cinnamon, methyl salicylate, linalool, bergamot oil, geranium oil, lemon oil, ginger oil, and tobacco flavor, tea flavor, wine flavor, berry flavor, coffee flavor, and so forth. Other suitable flavors may include flavor compounds selected from the group consisting of an acid, an alcohol, an ester, an aldehyde, a ketone, a pyrazine, combinations or blends thereof and the like. Other ingredients such as lactic acid, sucrose and other sweeteners, quinine and other bitter compounds may be used as well. If the flavorants, taste compounds, aromas or combinations thereof are in solid or powder form, they can be directly added to the process.

In S120, the flavorants, taste compounds, aromas or combinations thereof are mixed with the thermoplastic polymer prior to the mouth-end insert or add-on tip fabricating process. In example embodiments, the flavorants, taste compounds, aromas or combinations thereof are homogeneously mixed with the thermoplastic polymer. In example embodiments, the flavorants, taste compounds, aromas or combinations thereof may be included at a concentration from about 0.05 percent to about 5 percent, from about 1.0 percent to about 3 percent, or from about 1.0 percent to about 2 percent, by weight of the mixture. In example embodiments, the flavorants, taste compounds, aromas or combinations thereof are provided in liquid form or in the form of particles, granules, or encapsulated, and are configured to withstand the manufacturing temperature of the mouth-end insert without losing substantially any of the flavor, taste or aroma. When the flavorants, taste compounds, aromas or combinations thereof are encapsulated, the capsules including the flavorants, taste compounds, aromas or combinations thereof are of a material that is also configured to withstand the manufacturing temperatures of the mouth-end insert or the add-on tip. For example, the capsules are configured to withstand temperatures of up to about 350 degrees Celsius without undergoing physical or chemical degradation to a point where the capsules are no longer able to hold the flavorants, taste compounds, aromas or combinations thereof.

In S130, the mouth-end insert or add-on tip fabricating process is performed. In example embodiments, the fabricating process may be an injection molding process, or may be another process capable of solidifying the mixture of thermoplastic polymer and flavorants, taste compounds, aromas or combinations thereof. Accordingly, the entirety of the mixture of flavorants, taste compounds, aromas or combinations thereof with the thermoplastic polymer is subjected to the injection molding process. As a result of the injection molding process, a mouth-end insert or add-on tip that includes particles of flavorants, taste compounds, aromas or combinations thereof homogeneously distributed within the matrix of the mouth-end insert or add-on tip is produced. For example, a flavorant may impart a menthol flavor to the vapor when the vapor passes through the mouth-end insert or the add-on tip on the way to the mouth of the adult e-vaper. In example embodiments, an aroma may impart a sweet or sour taste to the vapor. In example embodiments, fillers may also be added to the mixture prior to undergoing the fabricating process. For example, the fillers may hold the liquid flavors within the polymer matrix after the injection molding process.

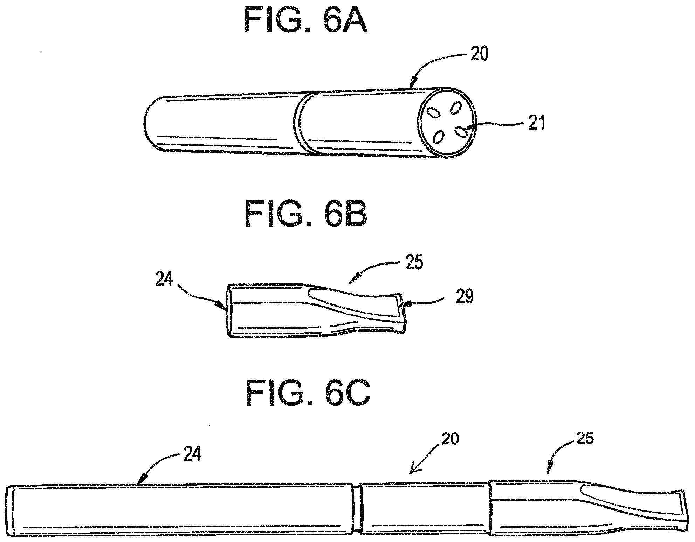

Figs. 6(a)-(c) are a perspective views of a mouth-end insert and an add-on tip, according to at least one example embodiment. In Fig. 6(a), the month-end insert 20 includes outlets 21 located at ends of off-axis passages 23 and are angled outwardly in relation to the longitudinal direction of the e-vaping device. The mouth-end insert 20 and the outlets 21 are configured to distribute the vapor generated inside the e-vaping device in the mouth of the adult vaper during operation of the e-vaping device. As such, when the vapor passes through the mouth-end insert 20, the vapor may include the taste of the flavorants, taste compounds, aromas or combinations thereof that are part of the matrix of the mouth-end insert 20.

In Fig. 6(b), the add-on tip 25 includes a mouth-end portion 29 and an e-vaping device portion 24. When the vapor passes through the mouth-end insert 20, the vapor may include the taste of the flavorants, taste compounds, aromas or combinations thereof that are part of the matrix of the e-vaping device portion 24 and then of the mouth-end insert 20 of the add-on tip 25 before reaching the mouth of the adult e-vaper during operation of the e-vaping device. Fig. 6(c) illustrates an e-vaping device 60 including both a mouth-end insert 20 and an add-on tip 25.

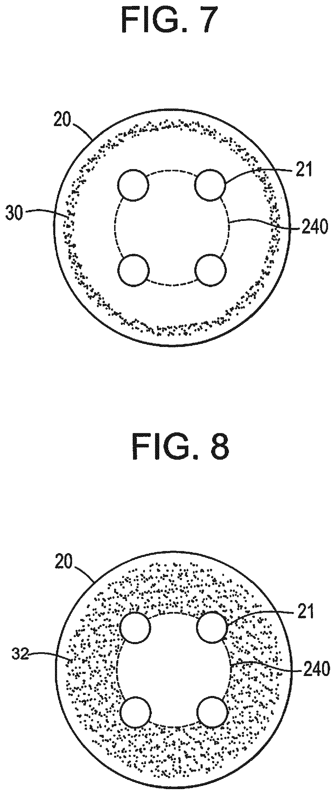

Fig. 7 is a cross-section of a mouth-end insert 20 or an add-on tip 25, the solid polymer matrix of the mouth-end insert or add-on tip including one or more flavorants, according to at least one example embodiment. In Fig. 7, the mouth-end insert 20 or add-on tip 25 includes the outlets 21 and the mixing chamber 240. In example embodiments, the mouth-end insert 20 or add-on tip 25 includes a plurality of flavorant particles 30 that are embedded in the matrix of the mouth-end insert 20. In Fig. 7, as a result of radial migration or diffusion of the flavorant particles 30, the flavorant particles 30 are substantially radially distributed at or near the outer surface of the mouth-end insert 20 or add-on tip 25.

During operation of the e-vaping device, as the vapor passes through the mixing chamber 240 and the outlets 21 to the mouth of an adult e-vaper, the vapor collects one or more flavors from the flavorants embedded in the solid polymer matrix of the mouth-end insert 20 or add-on tip 25. As a result, if one or more flavorants typically adversely react with each other or with other ingredients of the pre-vapor formulation, degradation of the pre-vapor formulation, or degradation of the flavorants, may be substantially avoided or reduced. As a result, the adult e-vaper is able to taste a combination of flavorants that would otherwise not be available due to the adverse reactions of the various flavorants with each other or with other ingredients of the pre-vapor formulation.

Fig. 8 is a cross-section of a mouth-end insert 20 or add-on tip 25, the solid polymer matrix of the mouth-end insert or add-on tip including one or more aromas, according to at least one example embodiment. In Fig. 8, the mouth-end insert 20 or add-on tip 25 includes the outlets 21 and the mixing chamber 240. In example embodiments, the mouth-end insert 20 or add-on tip 25 includes a plurality of aroma particles 32 that are embedded in the solid polymer matrix of the mouth-end insert 20 or add-on tip 25. In Fig. 8, the aroma particles 32 are typically homogeneously distributed throughout the matrix of the mouth-end insert 20 or add-on tip 25, consistent with the substantially homogeneous distribution of aroma particles 32 in the mixture of the thermoplastic polymer prior to the injection molding process that results in the formation of the mouth-end insert 20 or add-on tip 25.

Example embodiments having therefore been described, it will be obvious that the same may be varied in many ways. Such variations are not to be regarded as a departure from the intended scope of example embodiments.

## Claims

1. An e-vaping device (60) comprising a mouth end insert (20) including a flavored portion, the flavored portion comprising:
a solid matrix; and
at least one of one or more flavorants (30), one or more taste compounds and one or more aromas (32);
the at least one of the one or more flavorants (30), one or more taste compounds and one or more aromas (32) being embedded within the solid matrix.

2. The e-vaping device (60) of claim 1, wherein the at least one of one or more flavorants (30), one or more taste compounds and one or more aromas (32) is substantially homogeneously distributed within the solid matrix.

3. The e-vaping device (60) of claim 1 or 2, wherein the at least one of one or more flavorants (30), one or more taste compounds and one or more aromas (32) is distributed at a radially outer region of the solid matrix.

4. The e-vaping device (60) of claim 1, 2 or 3, wherein the solid matrix comprises a thermoplastic polymer.

5. The e-vaping device (60) of claim 4, wherein the thermoplastic polymer comprises at least one of polypropylene and polyethylene.

6. The e-vaping device (60) of any preceding claim, wherein the at least one of the one or more flavorants (30), one or more taste compounds and one or more aromas (32) is configured to withstand a temperature of up to about 350 degrees Celsius.

7. The e-vaping device (60) of any preceding claim, wherein the at least one of the one or more flavorants (30), one or more taste compounds and one or more aromas (32) are encapsulated in a plurality of capsules.

8. The e-vaping device (60) of any preceding claim, wherein the solid matrix further comprises a filler.

## Patentansprüche

1. E-Dampfvorrichtung (60), aufweisend einen Mundendeeinsatz (20) einschließlich eines aromatisierten Abschnitts, wobei der aromatisierte Abschnitt aufweist:
eine feste Matrix; und
mindestens eines von einem oder mehreren Geschmacksstoffen (30), einer oder mehreren Geschmacksverbindungen und einem oder mehreren Aromen (32);
wobei das mindestens eine von dem einen oder den mehreren Geschmacksstoffen (30), der einen oder den mehreren Geschmacksverbindungen und dem einen oder den mehreren Aromen (32) innerhalb der festen Matrix eingebettet ist.

2. E-Dampfvorrichtung (60) nach Anspruch 1, wobei das mindestens eine von einem oder mehreren Geschmacksstoffen (30), einer oder mehreren Geschmacksverbindungen und einem oder mehreren Aromen (32) im Wesentlichen homogen innerhalb der festen Matrix verteilt ist.

3. E-Dampfvorrichtung (60) nach Anspruch 1 oder 2, wobei das mindestens eine von einem oder mehreren Geschmacksstoffen (30), einer oder mehreren Geschmacksverbindungen und einem oder mehreren Aromen (32) an einer radial äußeren Region der festen Matrix verteilt ist.

4. E-Dampfvorrichtung (60) nach Anspruch 1, 2 oder 3, wobei die feste Matrix ein thermoplastisches Polymer aufweist.

5. E-Dampfvorrichtung (60) nach Anspruch 4, wobei das thermoplastische Polymer mindestens eines vonPolypropylen und Polyethylen aufweist.

6. E-Dampfvorrichtung (60) nach einem der vorstehenden Ansprüche, wobei das mindestens eine von dem einen oder den mehreren Geschmacksstoffen (30), der einen oder den mehreren Geschmacksverbindungen und dem einen oder den mehreren Aromen (32) ausgelegt ist, einer Temperatur von bis zu ungefähr 350 Grad Celsius standzuhalten.

7. E-Dampfvorrichtung (60) nach einem der vorstehenden Ansprüche, wobei das mindestens eine von dem einen oder den mehreren Geschmacksstoffen (30), der einen oder den mehreren Geschmacksverbindungen und dem einen oder den mehreren Aromen (32) in mehreren Kapseln gekapselt ist.

8. E-Dampfvorrichtung (60) nach einem der vorstehenden Ansprüche, wobei die feste Matrix weiter ein Füllmaterial aufweist.

## Revendications

1. Dispositif de vapotage électronique (60) comprenant un insert d'extrémité buccale (20) incluant une partie aromatisée, la partie aromatisée comprenant :
une matrice solide ; et
au moins un parmi un ou plusieurs aromatisants (30), un ou plusieurs composés de goût et un ou plusieurs arômes (32) ;
l'au moins un parmi un ou plusieurs aromatisants (30), un ou plusieurs composés de goût et un ou plusieurs arômes (32) sont intégrés dans la matrice solide.

2. Dispositif de vapotage électronique (60) selon la revendication 1, dans lequel l'au moins un parmi un ou plusieurs aromatisants (30), un ou plusieurs composés de goût et un ou plusieurs arômes (32) sont distribués de manière sensiblement homogène dans la matrice solide.

3. Dispositif de vapotage électronique (60) selon la revendication 1 ou 2, dans lequel l'au moins un parmi un ou plusieurs aromatisants (30), un ou plusieurs composés de goût et un ou plusieurs arômes (32) sont distribués dans une région radialement externe de la matrice solide.

4. Dispositif de vapotage électronique (60) selon la revendication 1, 2 ou 3, dans lequel la matrice solide comprend un polymère thermoplastique.

5. Dispositif de vapotage électronique (60) selon la revendication 4, dans lequel le polymère thermoplastique comprend au moins l'un des polypropylène et polyéthylène.

6. Dispositif de vapotage électronique (60) selon l'une quelconque des revendications précédentes, dans lequel l'au moins un parmi un ou plusieurs aromatisants (30), un ou plusieurs composés de goût et un ou plusieurs arômes (32) est configuré pour résister à une température allant jusqu'à environ 350 degrés Celsius.

7. Dispositif de vapotage électronique (60) selon l'une quelconque des revendications précédentes, dans lequel l'au moins un de l'un ou plusieurs aromatisants (30), un ou plusieurs composés de goût et un ou plusieurs arômes (32) est encapsulé dans une pluralité de capsules.

8. Dispositif de vapotage électronique (60) selon l'une quelconque des revendications précédentes, dans lequel la matrice solide comprend en outre une substance de charge.
